# EUROPÄISCHE PATENTSCHRIFT

(11) **EP 2 254 749 B1**
(45) Veröffentlichungstag und Bekanntmachung des Hinweises auf die Patenterteilung: **18.12.2013**
(21) Anmeldenummer: 09720371.5
(22) Anmeldetag: 12.02.2009
(51) Int. Cl.: B29C 70/48, B29C 33/52, B29C 33/76, B29C 33/00

(54) **KERNFORM ZUR HERSTELLUNG EINES FASERVERBUNDBAUTEILS**
CORE FOR PRODUCING AN FIBER REINFORCED COMPOSITE PART
FORME POUR LA FABRICATION D'UNE PIÈCE COMPOSITE RENFORCÉE PAR DES FIBRES

(30) Priorität: 12.03.2008 DE 102008013759; 12.03.2008 US 35975 P
(43) Veröffentlichungstag der Anmeldung: 01.12.2010
(60) Teilanmeldung: 11151780.1
(73) Patentinhaber: Airbus Operations GmbH, 21129 Hamburg (DE)
(72) Erfinder: ENDER, Tobias, 28259 Bremen (DE)
(74) Vertreter: Isarpatent
(86) Internationale Anmeldenummer: PCT/EP2009/051603
(87) Internationale Veröffentlichungsnummer: WO 2009/112321

(56) Entgegenhaltungen:
- EP-A- 1 074 466
- EP-A- 1 310 351
- EP-A- 1 764 307
- EP-A- 1 772 621
- WO-A-03/103933
- WO-A-2004/000643
- DE-A1-102004 009 744
- DE-U1- 29 617 904
- FR-A- 2 018 129
- GB-A- 845 093
- US-A1- 2002 090 874

## Beschreibung

Die Erfindung betrifft ein Verfahren zur Herstellung eines integralen Faserverbundbauteils, insbesondere einer aerodynamischen Wirkfläche, mit einer Vielzahl von mit einer Außenhaut umschlossenen Versteifungselementen.

Darüber hinaus betrifft die Erfindung eine Kernform zur gleichzeitigen und flexiblen Herstellung der für das Verfahren benötigten Kerne.

Im modernen Flugzeugbau werden die klassischen Aluminiumwerkstoffe zunehmend durch den Einsatz von Faserverbundbauteilen verdrängt, die beispielsweise mit kohlefaserverstärkten duroplastischen oder thermoplastischen Kunststoffmaterialien gebildet sind. Vielfach werden heutzutage schon komplexe Strukturkomponenten wie Landeklappen oder ganze Seitenleitwerke durchgängig mit derartigen Faserverbundwerkstoffen, insbesondere mit CFK-Materialien wie kohlefaserverstärkte Epoxidharze, hergestellt.

Derartige Strukturkomponenten werden aufgrund ihrer räumlichen Abmessungen und/oder der komplexen geometrischen Gestalt, in der Regel in der so genannten differentiellen Bauweise erstellt, bei der die Strukturkomponenten aus einer Vielzahl von vorgefertigten Einzelkomponenten mit einer in der Regel einfacheren Geometrie in einem abschließenden Montageschritt zusammengefügt werden.

Als ein Beispiel sei in diesem Zusammenhang eine Landeklappe für ein Flugzeug genannt, bei der auf mehreren parallel beabstandet zueinander verlaufenden Längsholmen eine Vielzahl von Querrippen zur Auflage der Hautschale befestigt wird. Durch die Außenkontur der Querrippen und die Form der Hautschale wird letztendlich die Oberflächengeometrie der Hautschalen definiert und damit das aerodynamische Verhalten der Landeklappe festgelegt. Sämtliche Bauteile müssen darüber hinaus spannungsfrei montierbar sein, um die Einbringung zusätzlicher Lasten in die Struktur zu vermeiden.

Der Nachteil der differentiellen Bauweise liegt unter anderem darin, dass die Einzelteile in einem zusätzlichen Montageschritt zum fertigen Bauteil zusammengefügt werden müssen. Ferner sind für den Verbindungsprozess zwischen den Komponenten im Allgemeinen Überlappungen bzw. Flansche erforderlich, die immer ein Zusatzgewicht bedingen.

Weitere Nachteile entstehen durch die bevorzugt Anwendung findende Nietverbindung der Einzelteile. Da Faserverbundbauteile im Vergleich zu metallischen Werkstoffen erheblich kleinere Lochleibungsfestigkeiten aufweisen, stellt jede einge-brachte Nietbohrung statisch einen Nachteil dar, der durch höhere Materialstärken im Bohrungsbereich kompensiert werden muss. Um derartige Nietverbindungen überhaupt an Faserverbundbauteilen einsetzen zu können, müssen beispielsweise an Schalenstrukturen ebenfalls erhöhte Materialstärken und vergrößerte Flanschbereiche vorgesehen werden, damit im Versagensfall der Nietverbindung eine Reparatur unter Schaffung einer weiteren Nietverbindung überhaupt möglich ist. All diese Einschränkungen führen dazu, dass das Verbundbauteil nicht im Hinblick auf eine maximal zu erwartende mechanische Belastung sondern auf Fertigungsrandbedingungen bzw. sicherheitstechnische Reparaturanforderungen hin dimensioniert wird, was sich unnötiger Weise gewichtserhöhend auswirkt.

Grundsätzlich lassen sich die Einzelteile auch durch Kleben verbinden, wodurch zumindest das Problem der verringerten Lochleibungsfestigkeit eliminiert ist. Doch bestehen für das so genannte "strukturelle Kleben" an hochbelasteten Bauteilen an Flugzeugen im Hinblick auf die erforderliche Oberflächenvorbehandlung, die Ermüdungssicherheit sowie die Widerstandsfähigkeit gegen Schlagbeanspruchungen (so genannte "Impact"-Resistenz) nach wie vor erhebliche Probleme, die eine Anwendung aus sicherheitstechnischen Gründen, zumindest im Bereich der Zivilluftfahrt, zur Zeit noch nicht erlauben.

Eine gangbare Alternative zur differentiellen Bauweise stellt die integrale Bauweise dar, bei der Faserverbundbauteile mit einer komplexen Geometrie einstückig hergestellt werden, so dass die vorstehend erwähnten Nachteile durch die Verbindung einer Vielzahl von Einzelteilen zu einer komplexen Gesamtstruktur entfallen.

Ein großes Problem bei der Herstellung derartiger integraler Bauteile, bei denen es sich zum Beispiel um vollständige Landeklappen, Bremsklappen, Querruder, Landeklappenträger, Vorflügel, Triebwerkshalter, Winglets, Tragflächen, Leitwerke, Ruder, Türen, Deckel, Verkleidungen, Halter etc. handeln kann, stellen die in vielen Fällen notwendigen hinterschnittenen Strukturen zur Schaffung der notwendigen Aussteifungen innerhalb der geschlossenen Außenhaut dar.

Das Dokument GB 845 093 A offenbart ein Kernform, dadurch gekennzeichnet, dass die Kernform eine Vielzahl von Zellen aufweist, die zwischen einem oberen und einem unteren Formteil zur Definition der inneren Oberflächengeometrie einer Außenhaut eingeschlossen sind, wobei die Zellen mit einer Vielzahl von jeweils zueinander beabstandet verlaufenden Trennblechen gebildet sind, und eine Vielzahl von Bohrungen zum Durchführen von Positioniermitteln aufweisen, und jede Zelle mindestens eine Bohrung zur Zuführung eines Materials aufweist.

Die Erfindung unterscheidet sich daher von der bekannten Kernform dadurch, daß zusätzliche Trennblechen eingebracht sind, die sich mit den ersten zumindest teilweise kreuzen, und dass das Kernmaterial durch die Zuführbohrungen eingefügt ist.

Im Folgenden wird ein von der vorliegenden Erfindung nicht umfasstes Verfahren zur Herstellung eines komplexen, integralen Faserverbundbauteils mit einer Vielzahl von hinterschnittenen Versteifungselementen beschrieben, das zudem flexibel im Hinblick auf variierende konstruktive Randbedingungen für das Faserverbundbauteil ist und das sich in einen weitgehend automatisierten, industrialisierten Fertigungsprozess einbetten lässt. Die Aufgabe der Erfindung ist es, eine im Hinblick auf sich ändernde konstruktive Erfordernisse flexible Kernform zur Herstellung der für das Verfahren benötigten Kerne bereitzustellen.

Das Verfahren weist die folgenden Verfahrensschritte auf:
a) Herstellen einer Vielzahl von entfernbaren Kernen in einer Kernform, wobei die Kerne im Wesentlichen eine innere Oberflächengeometrie des Faserverbundbauteils abbilden,
b) Auflegen von mit Verstärkungsfasern gebildeten Vorformlingen auf die Kerne zur Ausbildung der Versteifungselemente und Anordnen der Kerne zu einem Gesamtaufbau,
c) Belegen der Kerne mit einem bahnförmigen Halbzeug zur Schaffung der Außenhaut,
d) Einbringen des Gesamtaufbaus in ein geschlossenes Formwerkzeug und Infiltrieren des Gesamtaufbaus mit einem aushärtbaren Kunststoffmaterial,
e) Aushärten zum fertigen Faserverbundbauteil durch die Anwendung von Druck und/oder Temperatur, und
f) Entfernen der Kerne.

In einem ersten Verfahrensschritt a) werden alle für die Durchführung des Verfahrens benötigten Kerne hergestellt. Zum Gießen der Kerne dient eine separate, geschlossene Kernform, die mindestens ein oberes und ein unteres Formteil aufweist. In der Kernform ist eine Vielzahl von sich zur Schaffung von Zellen zumindest teilweise kreuzenden Trennblechen angeordnet. Um die Anordnung der Trennbleche unter Schaffung von Kreuzungsbereichen zu erlauben, weisen die Trennbleche quer zu deren Längsverlauf jeweils Längsschlitze auf, die sich bis etwa zur Blechmitte erstrecken. Somit lassen sich die Trennbleche wechselseitig ineinander stecken. Im Kreuzungsbereich sind die Längsschlitze in den sich kreuzenden Blechen gegenüberliegend eingebracht. Jede auf diese Weise gebildete Zelle in der Kernform stellt einen abgeschlossenen Gießraum für einen herzustellenden Kern dar und ist über mindestens eine Bohrung im unteren und/oder oberen Formteil mit dem Kernmaterial befüllbar. Gegebenenfalls sind auch Entlüftungsbohrungen vorzusehen, um ein schnelles und vor allem blasenfreies Gießen der Kerne zu befördern.

Die beiden Formteile der Kernform definieren ein Abbild einer "inneren" Oberflächengeometrie des herzustellenden Faserverbundbauteils, bei dem es sich beispielsweise um eine Landeklappe handeln kann. Im Fall der Herstellung einer Landeklappe sind die Trennbleche zwischen den Zellen zum Beispiel als Holmbleche und als Rippenbleche ausgebildet. Die Holmbleche und die Rippenbleche stellen Platzhalter für die später im Faserverbundbauteil entstehenden, gegebenenfalls hinterschnittenen Aussteifungselemente in der Form von (Längs-)Holmen und (Quer-)Rippen dar.

Zur Herstellung der Kerne werden die Holmbleche und die Rippenbleche vorzugsweise in das untere Formteil eingesteckt, das zu diesem Zweck mit Nuten versehen ist, und die gesamte Anordnung wird durch das Auflegen des oberen Formteils geschlossen. Anschließend wird das Kernmaterial durch die Bohrungen in den Formteilen in die geschlossene Kernform eingegeben und ausgehärtet.

Als Kernmaterial kann ein niedrigschmelzender Stoff, zum Beispiel ein Wachs, eine Metalllegierung oder dergleichen, Verwendung finden. Alternativ kann für das Kernmaterial auch eine sich zunächst verfestigende Substanz eingesetzt werden, die nachträglich durch ein geeignetes Lösungsmittel, wie beispielsweise Wasser, Verdünnung oder dergleichen, vollständig gelöst und im letzten Verfahrensschritt wieder aus der Kernform heraus gespült wird. Unbeschadet des eingesetzten Kernmaterials sollte dieses für den nachfolgenden Infiltrationsprozess ("RTM-Prozess") über eine ausreichende Druckfestigkeit von mindestens 8 bar verfügen. Das Entfernen der Kerne erfolgt mittels nachträglich in die Außenhaut eingebrachter Bohrungen, durch die das Lösungsmittel zum Auflösen der Kerne eingebracht wird und das Kernmaterial abfließen kann. Technische Epoxidharzsysteme für den Flugzeugbau verfügen heutzutage in der Regel noch über so hohe Aushärtungstemperaturen (≈ 180 °C), dass der Einsatz von schmelzbaren Kernen nicht angezeigt ist. Der matrixförmige Gesamtaufbau mit allen Kernen (so genannter "Kerne"-Verbund) bildet die gewünschte innere Oberflächengeometrie des herzustellenden späteren Faserverbundbauteils ab. Konstruktive Änderungen am Faserverbundbauteil, beispielsweise Änderungen der Materialstärke der Holme und/oder der Rippen, können durch den Austausch der betreffenden Trennbleche leicht und schnell umgesetzt werden, ohne dass aufwändige Änderungen an dem für den abschließenden Infiltrationsprozess eingesetzten (RTM-)Formwerkzeug erforderlich wären. Zu diesem Zweck ist die Kernform vorzugsweise mit einem leicht bearbeitbaren Material, wie zum Beispiel einer Aluminiumlegierung gebildet.

In einem zweiten Verfahrensschritt b) werden mit Verstärkungsfasern gebildete Vorformlinge (so genannte trockene "Preforms" mit Binder) allseitig auf die Kerne aufgelegt, um insbesondere die Faserverstärkungen für die Holme, die Rippen sowie die Außenhaut zu bilden. Erforderlichenfalls können mehrere Vorformlinge übereinander platziert werden. Anschließend werden die Kerne zueinander positioniert, um die gewünschte Gestalt des Faserverbundbauteils abzubilden. Im Fall der Herstellung einer Landeklappe werden zunächst die Kerne in Richtung der Längserstreckung der Landeklappe positioniert und dann die Kerne in der Querrichtung hierzu reihenweise angegliedert. Da die Vorformlinge bzw. die Preforms bereits mit einem Bindemittel versehen sind, verfügen diese über eine gewisse Formstabilität.

Im dritten Verfahrensschritt c) werden die zueinander positionierten und ausgerichteten Kerne mit einem bahnförmigen, mit Verstärkungsfasern gebildeten Halbzeug zur Schaffung der vorzugsweise in sich geschlossenen Außenhaut versehen. Bei dem Halbzeug handelt es sich bevorzugt um ein hoch drapierfähiges/elastisches Gewebe, das sich der von den Kernen vorgegebenen, in der Regel zweidimensional gekrümmten Oberflächengeometrie im Idealfall faltenfrei anpasst. Sowohl die Faservorformlinge als auch das bahnförmige Halbzeug sind bevorzugt mit Kohlefasern gebildet. Grundsätzlich können alle als Verstärkungsfasern geeigneten Fasern, wie zum Beispiel Glasfasern, Keramikfasern, Naturfasern (Hanf) etc. zum Einsatz kommen.

Die Fixierung der Vorformlinge und des bahnförmigen Halbzeugs kann durch nachträgliches "Bindern" mit einem beispielsweise thermoplastischen Kunststoffmaterial, zum Beispiel durch Aufsprühen in Pulverform, erfolgen. Alternativ kann ein geeignetes thermoplastisches Bindemittel bereits in den Vorformlingen bzw. dem bandförmigen Halbzeug eingearbeitet sein, so dass eine einfache Erwärmung zur Lagefixierung der Vorformlinge bzw. des Halbzeugs auf den Kernen ausreichend ist. Zur Auffüllung von unerwünschten Hohlräumen, insbesondere zwischen den mit den Vorformlingen belegten Kernen, ist es im Allgemeinen notwendig, zwischen den Kernen Zwickel und/oder einzelne Verstärkungsfaserstränge ("Rovings") oder mehrere Lagen eines Verstärkungsgewebes zusätzlich einzulegen.

Im vierten Verfahrensschritt d) erfolgt die Einbringung des so geschaffenen Gesamtaufbaus in ein mindestens zweigeteiltes, vorzugsweise metallisches Formwerkzeug, dessen durch die Formhälften definierte innere Oberflächengeometrie mit sehr hoher Genauigkeit die gewünschte Oberflächengeometrie des herzustellenden Faserverbundbauteils verkörpert. Nach dem Schließen der mindestens zwei Formhälften wird der Gesamtaufbau im bekannten Harzinfiltrationsverfahren ("RTM"-Verfahren ≡ **R**esin-**T**ransfer-**M**olding-**V**erfahren) mit einem aushärtbaren, gegebenenfalls unter Überdruck stehenden Kunststoffmaterial, insbesondere einem aushärtbaren Epoxidharz, durchtränkt bzw. imprägniert. Bei dem metallischen Formwerkzeug handelt es sich um ein mit großer Präzision aus einem hochfesten und temperaturbeständigen Stahl gefertigtes RTM-Formwerkzeug. Durch das gleichzeitige Anlegen eines Unterdrucks an das RTM-Formwerkzeug wird der Infiltrationsprozess bzw. der Injektionsprozess beschleunigt und der Gefahr der Entstehung von Lufteinschlüssen und Hohlräumen begegnet. Die Beheizung des RTM-Formwerkzeugs erfolgt direkt und/oder indirekt. Im Fall der indirekten Beheizung wird das ganze RTM-Formwerkzeug in einen Ofen verbracht, während bei der direkten Beheizung Heizeinrichtungen unmittelbar in das Formwerkzeug integriert sind. Diese Heizeinrichtungen können mit elektrischen Heizelementen oder mit Bohrungen, durch die eine temperierbare Flüssigkeit, insbesondere Öl, geleitet wird, gebildet sein.

Im fünften Verfahrensschritt e) erfolgt die Aushärtung des fertigen Faserverbundbauteils durch die Anwendung von Druck und/oder Temperatur und im letzten, sechsten Verfahrensschritt f) werden schließlich die Kerne durch Erwärmen und/oder das Einbringen eines Lösungsmittels aus dem Faserverbundbauteil entfernt. Hierfür ist es in der Regel erforderlich, kleine Bohrungen in die geschlossene Außenhaut einzubringen, um das Abfließen des gelösten Kernmaterials bzw. des verflüssigten Kernmaterials zu ermöglichen. Alternativ können hierzu im Bereich der Ecken angeordnete Öffnungen in den Querrippen benutzt werden, die im fertigen Bauteil zum Abfluss von Kondensationswasser dienen.

Das Verfahren erlaubt somit durch die Verwendung einer zweidimensionalen Matrixanordnung von auflösbaren (schmelzbaren) bzw. nachträglich entfernbaren Kernen auf einfache Weise die Herstellung integraler Faserverbundbauteile mit einer komplexen inneren hinterschnittenen Versteifungsstruktur.

Eine vorteilhafte Weiterbildung des Verfahrens sieht vor, dass die Kerne nach dem Gießen und dem Aushärten mit einer undurchlässigen Schicht versehen werden. Hierdurch wird vermieden, dass beim abschließenden Infiltrationsprozess unkontrolliert Kunststoffmaterial in die Kerne gepresst wird und hierdurch bedingt, nach dem Aushärten und Auflösen der Kerne, eine undefinierte Innenoberfläche des Faserverbundbauteils ("Gießbäume") entsteht. Diese Schicht kann zugleich über Antihafteigenschaften verfügen, um auch das Heraus- bzw. Ablösen dieser Schicht aus dem fertigen Bauteil zu ermöglichen.

Weiterhin ist vorgesehen, dass die Versteifungselemente insbesondere als integral zur Außenhaut ausgebildete Rippen und Holme ausgestaltet werden. Grundsätzlich ist das Verfahren jedoch nicht auf eine klassische Holm-RippenStruktur mit Außenhaut, wie sie beispielsweise bei Tragflächen, Höhenleitwerken, Seitenleitwerken und Landeklappen von Flugzeugen traditionell Anwendung findet, beschränkt zu sehen. Vielmehr lassen sich bei entsprechender Anordnung und Gestalt der Trennbleche in der Kernform nahezu beliebig innerlich ausgesteifte Hohlstrukturen mit einer geschlossenen Außenhaut als Faserverbundbauteil herstellen. Ferner ist es nicht notwendig, dass sich die Trennbleche, die im Fall einer Landeklappe als Holm-Bleche und Rippenbleche ausgestaltet sind, im Kreuzungsbereich unter einem Winkel von 90° schneiden. Grundsätzlich sind beliebige Winkel und ein von der gradlinigen Form abweichender, beispielsweise gekrümmter Verlauf der Trennbleche innerhalb der Kernform möglich. Darüber hinaus kann den Trennblechen abweichend von der exemplarisch gezeigten Tragflügelquerschnittsgeometrie jede beliebige Höhenkontur verliehen werden, um Faserverbundbauteile mit einer in weiten Grenzen variablen zweifach gekrümmten und zugleich in sich geschlossenen Oberflächengeometrie zu erzeugen.

Das Verfahren ist insbesondere zur automatisierten, industriellen Fertigung von Faserverbundbauteilen in größeren Stückzahlen für die Passagierluftfahrt vorgesehen, in der zur Zeit noch überwiegend in konventioneller Einzelteilbauweise gefertigte Strukturfaserverbundbauteile mit Holm-Rippenstrukturen Anwendung finden.

Nach Maßgabe einer weiteren Fortbildung des Verfahrens ist vorgesehen, dass vor dem Auflegen des bahnförmigen Halbzeugs in mindestens eine Längsvertiefung, insbesondere eine Nut, in mindestens einem Kern ein Stringer-Vorformling eingebracht wird, wobei eine Stützung durch mindestens einen anschließend eingelegten Stützkörper erfolgt.

Hierdurch wird es möglich, zusätzlich zu den Versteifungselementen, beispielsweise in der Gestalt von Holmen und Rippen, Längsversteifungselemente, beispielsweise in der Form von Hut-Stringern bzw. Ω-Stringern integral zu der das Faserverbundbauteil umgebenden Außenhaut auszubilden. Als Stützkörper kommen bevorzugt aufblasbare Kunststoffschläuche (Folienschläuche) zum Einsatz, die im fertigen Verbundbauteil verbleiben oder erforderlichenfalls seitlich herausgezogen werden können. Alternativ können als Stützkörper auflösbare bzw. schmelzbare Kerne dienen, die auch für die übrigen Kerne mit Hinterschneidungen zum Einsatz kommen.

Die erfindungsgemäße Aufgabe wird durch eine Kernform mit den Merkmalen des Patentanspruchs 1 gelöst.

Dadurch, dass die Kernform eine Vielzahl von Zellen aufweist, die zwischen einem oberen und einem unteren Formteil zur Definition der inneren Oberflächengeometrie einer Außenhaut eingeschlossen sind, wobei die Zellen mit einer Vielzahl von jeweils zueinander beabstandet verlaufenden Trennblechen, insbesondere Rippenblechen und Holmblechen, gebildet sind, die sich zumindest teilweise kreuzen, und jede Zelle mindestens eine Bohrung zur Zuführung des Kernmaterials aufweist, ist eine zeitgleiche Herstellung aller für die Durchführung des Verfahrens erforderlichen Kerne möglich.

Darüber hinaus sind die Trennbleche und die mindestens zwei Formhälften der Kernform vorzugsweise mit einer leicht zu bearbeitenden Metalllegierung, beispielsweise mit einer Aluminiumlegierung hergestellt. Konstruktive Änderungen am Faserverbundbauteil können somit durch das bereichsweise Abtragen von Trennblechmaterial und/oder durch einen Austausch von Trennblechen umgesetzt werden. Soll beispielsweise die Materialstärke eines Versteifungselementes im fertigen Faserverbundbauteil aus statischen Erwägungen heraus verändert werden, so genügt es, das betreffende Trennblech durch ein anderes Trennblech mit der erforderlichen Materialstärke auszutauschen.

Weitere vorteilhafte Ausgestaltungen des Verfahrens und der Kernform sind in den weiteren Patentansprüchen dargelegt.

In der Zeichnung zeigt:
- **Fig. 1**: Eine isometrische Ansicht einer Kernform zur Herstellung der Kerne,
- **Fig. 2**: eine Querschnittsdarstellung durch drei ausgerichtete Kerne mit Vorformlingen und Halbzeug,
- **Fig. 3**: einen Querschnitt durch den Gesamtaufbau der vollständigen Verstärkungsfaseranordnung für eine Landeklappe,
- **Fig. 4**: einen Ausschnitt aus der Fig. 3 in einem Anschlussbereich zwischen einem vorderen Holm-Vorformling und dem bahnförmigen Halbzeug mit dem für den RTM-Prozess benutzten Formwerkzeug,
- **Fig. 5**: einen weiteren Ausschnitt aus der Fig. 3 im Bereich eines Stringer-Vorformlings,
- **Fig. 6**: eine Schnittdarstellung entlang der Schnittlinie VI-VI in der Fig. 3 im Bereich eines integral zu einer (Quer-)Rippe ausgestalteten Lasteinleitungspunktes,
- **Fig. 7**: eine Ausführungsvariante der Kernform mit Positioniermitteln für die Kerne,
- **Fig. 8**: einen vergrößerten Ausschnitt aus der Fig. 7,
- **Fig. 9**: eine schematische Darstellung des Aufbringens des bahnförmigen Halbzeugs für die Bildung der Außenhaut,
- **Fig. 10**: eine Darstellung eines Zuschnittes sowie eines hieraus geformten Eck-Vorformlings,
- **Fig. 11**: eine Darstellung eines Zuschnittes sowie eines hiermit gebildeten Rippen-Vorformlings, und
- **Fig. 12**: eine isometrische Darstellung einer Landeklappe als ein Beispiel für ein integral verfahrensgemäß gefertigtes Faserverbundbauteil mit innenliegenden, hinterschnittenen Versteifungselementen.

In der Zeichnung weisen dieselben konstruktiven Elemente jeweils die gleichen Bezugsziffern auf. Im weiteren Verlauf der Beschreibung werden das nicht von der vorliegenden Erfindung umfasste Verfahren sowie die zur Durchführung benutzten Vorrichtungen, insbesondere die Kernform zur Herstellung aller Kerne, nebeneinander dargestellt.

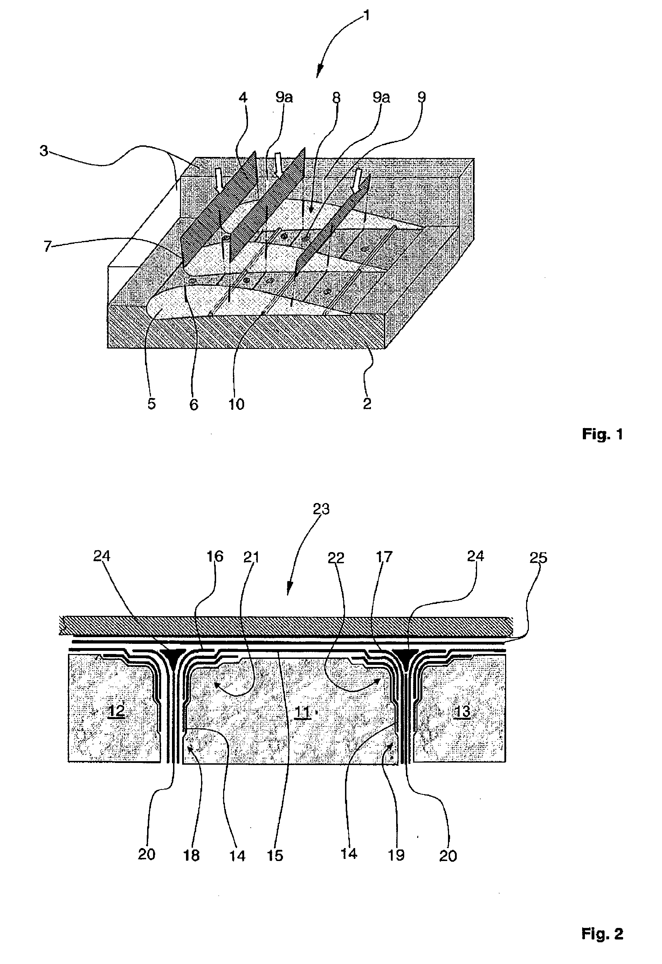

Die **Fig. 1** zeigt eine isometrische Darstellung der für die Herstellung der Kerne zur Durchführung des Verfahrens benutzten Form am Beispiel einer Landeklappe für ein Flugzeug.

Eine Kernform 1 umfasst einen unteren und einen oberen Formteil 2,3. Im Formwerkzeug ist eine Vielzahl von nicht einzeln bezeichneten Trennblechen angeordnet, die für den exemplarischen Fall der Fertigung einer Landeklappe als Holmbleche und quer dazu angeordnete Rippenbleche ausgeführt sind. Von den Holm- und den Rippenblechen sind lediglich ein vorderes Holmblech 4 und ein vorderes Rippenblech 5 mit einer Bezugsziffer versehen. Eine Querschnittsgeometrie des Rippenblechs 5 folgt der Querschnittsgeometrie der Landeklappe in diesem Bereich. Die Holmbleche 4 sind in nicht mit Bezugsziffern versehene Schlitze im unteren und/oder oberen Formteil 2,3 einsteckbar und hierdurch geführt. Das Rippenblech 5 verfügt im gezeigten Ausführungsbeispiel über insgesamt drei Schlitze, von denen lediglich ein vorderer Schlitz mit der Bezugsziffer 6 versehen ist, wobei sich die Schlitze jeweils ausgehend von einer Oberkante des Rippenblechs 5 bis etwa zu dessen mittleren Bereich erstrecken. Das Holmblech 4 verfügt ebenfalls über drei Schlitze bzw. längliche Ausnehmungen, von denen lediglich der vordere Schlitz 7 mit einer Bezugsziffer versehen ist. Im Unterschied zu den Schlitzen 6 in den Rippenblechen 5 verlaufen die Schlitze 7 in den Holmblechen 4 jeweils ausgehend von der Unterseite jeweils bis in etwa einen mittleren Bereich des betreffenden Holmblechs 4. Infolge der beschriebenen Schlitzanordnung können die Holmbleche 4 auf die Rippenbleche 5 unter Bildung von nicht bezeichneten Kreuzungsbereichen und einer Vielzahl von Zellen in Richtung der Pfeile (wechselseitig) aufgesteckt werden. Eine Zelle 8 ist repräsentativ für die Übrigen, entsprechend aufgebauten Zellen, mit einer Bezugsziffer versehen. Die insgesamt acht Zellen in der Fig. 1 stellen die eigentlichen, zur Herstellung der Kerne benutzten Gießformen dar. Unterseitig verfügt das Formteil 2 im Bereich der Zelle 8, wie die übrigen Zellen auch, über eine kleine Bohrung 9, über die ein geeignetes, flüssiges Kernmaterial eingebracht werden kann. Alternativ können die Bohrungen auch im oberen Formteil 3 vorgesehen sein. Ferner können zusätzliche Entlüftungsbohrungen 9a vorgesehen sein. Vor dem Einfüllen des Kernmaterials zur gleichzeitigen Herstellung aller acht Kerne werden die Trennbleche ein- bzw. zusammengesteckt und die beiden Formteile 2,3 zur Schaffung der Kernform 1 geschlossen.

Bei dem Kernmaterial der hinterschnittenen auflösbaren Kerne handelt es sich um einen schmelzbaren Stoff, dessen Schmelzpunkt oberhalb der Aushärtungstemperatur des Matrixmaterials liegt oder um eine aushärtbare Substanz, die nachträglich durch ein geeignetes Lösungsmittel, wie beispielsweise Wasser, chemische Lösungsmittel oder dergleichen, wieder aufgelöst und aus dem späteren Bauteil heraus gespült werden kann. Der Lösungsprozess kann physikalischer oder chemischer Natur sein. Bei der Verwendung von Epoxidharzen ist aufgrund der in der Regel hohen Aushärtungstemperatur von bis zu 200 °C in der Regel die Verwendung von löslichen Kernen vorzuziehen, da die zum Aufschmelzen der Kerne erforderlichen Temperaturen die Epoxidharzmatrix schädigen können. Durch Schmelzen auflösbare Kerne können jedoch in vorteilhafter Weise mit Duroplasten eingesetzt werden, die bei geringeren Temperaturen ausgehärtet werden. Zum Entfernen der Kerne dienen nachträglich eingebrachte Bohrungen in der Außenhaut und/oder jeweils in Eckbereichen der Querrippen angeordnete Öffnungen, die später als Drainageöffnungen für Kondensationswasser dienen. In Abhängigkeit vom eingesetzten Kernmaterial kann es erforderlich sein, die Kerne zusätzlich mit einem Trennfilm bzw. einer Trennschicht zu versehen, das heißt gegen das Eindringen des für die Herstellung des fertigen Faserverbundbauteils im Harzinfiltrationsprozess verwendeten Kunststoffmaterials, insbesondere eines Epoxidharzsystems, zu imprägnieren.

Das untere Formteil 2 verfügt weiterhin über drei Längsstege mit einer jeweils leicht trapezförmigen Querschnittsgeometrie, von denen der mittlere Steg die Bezugsziffer 10 trägt. Die parallel zu den Holmblechen 4 verlaufenden Stege 10 bewirken in den Kernen die unterseitige Ausbildung von Längsvertiefungen, insbesondere von trapezförmigen Nuten, die zur späteren Herstellung von Längsversteifungselementen, insbesondere in der Form von Hutstringern dienen.

Die Kernform 1 einschließlich der Trennbleche ist vorzugsweise mit einem leicht bearbeitbaren Material, beispielsweise einer Aluminiumlegierung oder dergleichen gebildet. Hierdurch können konstruktive Veränderungen am späteren Faserverbundbauteil, beispielsweise in Gestalt einer erhöhten oder reduzierten Materialstärke der Holme, durch den Austausch des betreffenden Holmblechs bzw. durch das Abtragen von Material des betroffenen Holmblechs rasch realisiert werden. Insbesondere ist eine Änderung der konstruktiv sehr aufwändigen und schwer zu bearbeitenden Form für den späteren Harzinfiltrationsprozess (RTM-Prozess), bei dem hochfeste Stahlformen zur Anwendung kommen, nicht mehr erforderlich, da nur das äußere Werkzeug mit einem hochfesten Stahl (hochwarmfeste ChromNickellegierung) gebildet ist, dessen Geometrie frühzeitig festliegt. Mit der gleichzeitigen Herstellung aller erforderlichen Kerne in der beschriebenen Vorrichtung ist der erste Verfahrensschritt a) abgeschlossen.

Die **Fig. 2** illustriert stark schematisch einen Querschnitt durch einen oberen Abschnitt eines Kerns mit mehreren Vorformlingen und zwei Lagen eines bahnförmigen Halbzeugs, die einen Ausschnitt aus einem Gesamtaufbau einer Verstärkungsfaseranordnung für das spätere Faserverbundbauteil darstellen.

Im Zuge des zweiten Verfahrensschrittes b) wird eine Vielzahl von unterschiedlichen Vorformlingen auf den Kernen platziert. Anschließend werden die Kerne zu einem Gesamtaufbau gruppiert, der im Wesentlichen eine innere Oberflächengeometrie des herzustellenden Faserverbundbauteils wiederspiegelt (vgl. Fig. **1**).

An einen mittleren Kern **11** schließen beidseitig die Kerne 12,13 an. Am Beispiel dieses mittleren Kerns **11** soll exemplarisch der Lagenaufbau erläutert werden. Auf den Kern 11 wird zunächst ein vorgefertigter Eck-Vorformling 14 (so genanntes "Preform") aufgelegt.

Ein Vorformling, wie beispielsweise der Eck-Vorformling 14, ist ein ebener Zuschnitt mit einer beliebigen Außenkontur aus einem multiaxialen Fasergelege (s.g. "**NCF**" ≡ **N**on **C**rimped **F**ibres) oder Gewebe, insbesondere mit Kohlefasern gebildeten, bahnförmigen Halbzeug, der gegebenenfalls zur Schaffung einer dreidimensionalen Struktur bereichsweise mindestens einmal gefaltet und/oder drapiert wurde. Grundsätzlich kann einem Vorformling jede durch Falten, Drapieren sowie Schneiden geometrisch mögliche Form gegeben werden. Letztlich wird jeder Vorformling mit einem geeigneten, insbesondere einem kraftflussgerechten bzw. belastungsgerechten Verlauf der Verstärkungsfasern hergestellt. Die Vorformlinge sind zum Beispiel mit einem Gewebe und/oder einem Gelege ("multiaxiales Gelege") aus Verstärkungsfasern in ± 45° sowie in 0°/90°-Anordnung hergestellt.

Es folgt ein Haut-Vorformling 15. Anschließend werden noch Holm- bzw. Rippenvorformlinge 16,17 zur Schaffung der betreffenden Aussteifungselemente an jeweils gegenüberliegende Seitenflächen 18, 19 des Kerns 11 in der erforderlichen Zahl angelegt. Ferner können optionale Zwischen-Vorformlinge 20 im Bedarfsfall zwischen den Kernen vorgesehen werden. Entscheidend ist, dass die Eck-Vorformlinge 14 und die Haut-Vorformlinge 15 im Bereich von Kanten 21,22 jeweils einander überlappend angeordnet sind. Dasselbe gilt für die Anordnung der Holm-Vorformlinge bzw. Rippen-Vorformlinge 16,17 auf den darunter liegenden Haut-Vorformlingen 15. Durch diese Verzahnung bzw. Überlappung der Vorformlinge untereinander wird ein inniger mechanischer Zusammenhalt der Vorformlinge im späteren Faserverbundbauteil erzielt.

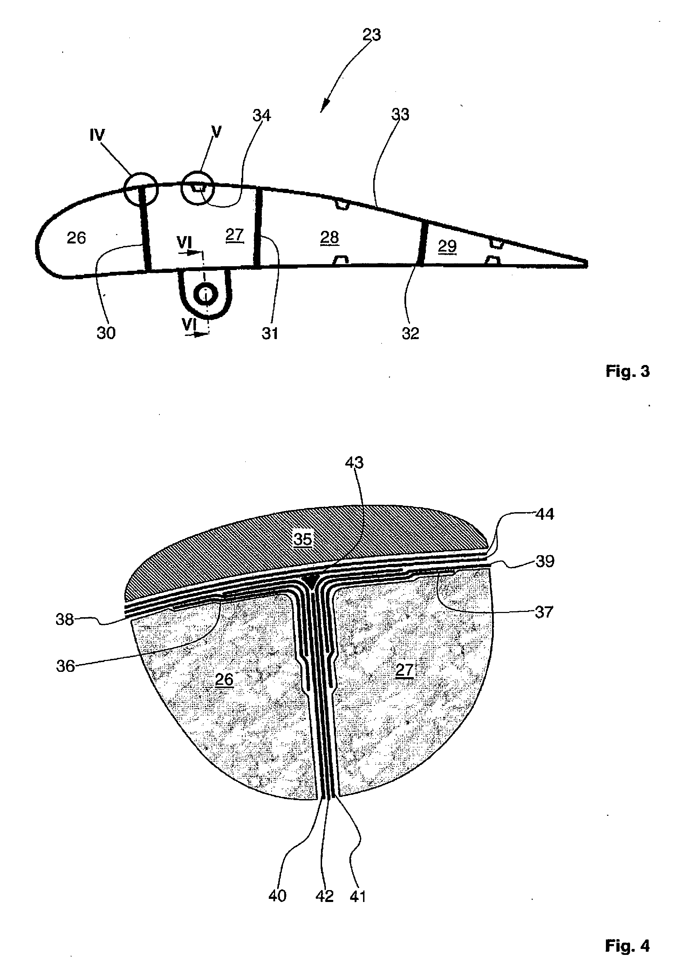

Um unerwünschte Aufdickungen im späteren Verbundbauteil zu vermeiden, weisen die umlaufenden Kanten 21,22 aller Kerne mehrere flache, zueinander abgestufte Vertiefungen auf (nicht bezeichnet), deren Tiefe exakt der jeweiligen Materialstärke der übereinander gelegten Vorformlinge entspricht. Hierdurch wird eine enge Toleranz des Faservolumenanteils von beispielsweise 60 % in einem Intervall von ± 4 % im fertigen Bauteil erreicht. Entsprechend der Anzahl der überlappenden Lagen ist eine entsprechende Anzahl von gestuften, versetzt angeordneten Absätzen vorgesehen. Die Vorformlinge weisen an mindestens einer Seite zumindest abschnittsweise eine Lasche (Flansch) auf, die entlang einer der Kanten 21,22 des Kerns 11 umgelegt, das heißt zur Anlage an eine der Seitenflächen 18,19 des Kerns 11 gebracht wird. Hierbei liegen die Laschen in Vertiefungen des Kerns 11, um einen nach oben glatten Abschluss zu erreichen. Die Vertiefungen können für den Fall, dass mehrere Laschen übereinander gelegt werden sollen, mehrfach gestuft ausgestaltet sein (vgl. insb. Fig. 4). Die Laschen können alternativ geschlitzt ausgebildet sein, um gekrümmten Kanten der Kerne folgen zu können. Bevorzugt weisen die Vorformlinge an allen Seiten jeweils durchgehend ausgestaltete Laschen auf.

Im Anschluss werden die Kerne 11 bis 13 so matrixförmig zueinander angeordnet, dass sie einer Innenkontur des späteren Faserverbundbauteils entsprechen, das heißt die mit den Vorformlingen versehenen Kerne 11 bis 13 sind wieder so zu einem Gesamtaufbau 23 angeordnet, wie sie ursprünglich der Kernform nach dem Gießprozess entnommen wurden (vgl. Fig. 1). In der Darstellung der Fig. 2 sind lediglich die oberen Bereiche der Kerne 11 bis 13 dargestellt, im Bereich der unteren Bereiche der Kerne 11 bis 13 wird entsprechend zur vorstehend geschilderten Vorgehensweise bei der Anordnung der Vorformlinge verfahren.

Die Vorformlinge sind vorzugsweise mit einem Gelege, mit einem Gewebe oder mit einer Vielzahl von diskreten Kohlefasern bzw. Kohlefaserrovings hergestellt. Zur Vervollständigung des die spätere Verstärkungsfaseranordnung des Verbundbauteils abbildenden Gesamtaufbaus 23 werden noch Zwickel 24 in Bereiche zwischen den Kernen 12 bis 13 eingelegt.

Zum Abschluss wird in einem dritten Verfahrensschritt c) der Gesamtaufbau 23 der Kerne noch mit mindestens einer Lage eines bahnförmigen Halbzeugs 25 belegt, um die spätere Verstärkung für die Außenhaut des Faserverbundbauteils zu schaffen.

Bei dem bahnförmigen Halbzeug 25 handelt es sich vorzugsweise um ein hochdrapierfähiges, mit Kohlefasern gebildetes Gewebe oder Gelege, das der in der Regel zweifach gekrümmten Oberflächengeometrie der Kerne 11 bis 13 faltenfrei zu folgen vermag. Die vorstehend geschilderte Abfolge des Aufbringens der Vorformlinge bzw. des bahnförmigen Halbzeugs 25 wird bei allen Kernen angewendet. Darüberhinaus kann es erforderlich sein, zur Auffüllung von Hohlräumen gegebenenfalls einzelne, mit Kohlefaserrovings gebildete Kohlefaserzwickel 24 mit in den Gesamtaufbau 23 einzulegen. Das Halbzeug 25 liegt oben an einem schraffiert dargestellten, nicht mit einer Bezugsziffer versehenen oberen Teil eines RTM-Formwerkzeugs an.

Zur Lagefixierung der Vorformlinge und des bahnförmigen Halbzeugs 25 auf den Kernen 11 bis 13 kann es ferner von Vorteil sein, beispielsweise ein thermoplastisches Bindemittel aufzutragen. Alternativ können Vorformlinge bzw. bandförmige Halbzeuge verwendet werden, die bereits herstellerseitig mit einem thermoplastischen Bindemittel ausgerüstet ("vorgebindert") sind, so dass zur Lagefixierung eine Erwärmung ausreichend ist.

Die **Fig. 3** zeigt einen schematischen Querschnitt durch den Gesamtaufbau der trockenen Verstärkungsfaseranordnung, während die **Fig. 4** eine Ausschnittvergrößerung im Bereich zwischen den Holm-Vorformlingen und dem die Außenhaut bildenden bahnförmigen Halbzeug darstellt. Im Weiteren wird zugleich auf die Fig. 3,4 Bezug genommen.

Der trockene (Verstärkungsfaser-)Gesamtaufbau 23 umfasst unter anderem vier Kerne 26 bis 29, die durch drei Holm-Vorformlinge 30 bis 32 getrennt und von einem bahnförmigen Halbzeug 33 zur Bildung der späteren Außenhaut umgeben sind. Weiterhin sind sechs entsprechend vorgeformte Stringer-Vorformlinge, von denen lediglich ein Stringer-Vorformling 34 mit einer Bezugsziffer versehen ist, in den Kernen 27 bis 29 vorgesehen, die zur integralen Ausbildung der Längsversteifungsprofile, insbesondere der Stringer bzw. der Ω-Stringer oder der Hut-Stringer, im späteren Verbundbauteil dienen.

Dieser Gesamtaufbau 23 wird im Verfahrensschritt d) für den Infiltrationsvorgang bzw. den RTM-Prozess in ein geschlossenes Formwerkzeug 35 eingelegt. Das Formwerkzeug 35 ist mit einer hochfesten und wärmeresistenten Stahllegierung gebildet. Nur durch das Formwerkzeug 35 wird die äußere Oberflächengeometrie des Verbundbauteils definiert. Nach der vollständigen Infiltration des Gesamtaufbaus 23 mittels eines aushärtbaren Kunststoffmaterials, insbesondere eines Epoxidharzsystems oder dergleichen, erfolgt im Verfahrensschritt e) die vollständige Aushärtung zum fertigen Faserverbundbauteil. Die hierzu notwendige Erwärmung des RTM-Werkzeugs kann durch eine direkte oder indirekte Beheizung erfolgen. Die Kerne 26 bis 29 werden im letzten Verfahrensschritt f) durch Aufschmelzen oder Ausspülen entfernt bzw. aufgelöst. Hierzu dienen Bohrungen in jeder durch zwei Rippen und Holme begrenzten Zelle, die nachträglich in die Außenhaut eingebracht werden und die später zu Entwässerungszwecken, für die Durchführung von Materialuntersuchungen sowie Wartungs- und Inspektionsaufgaben dienen können.

Eine zuverlässige Prüfung des fertigen integralen Verbundbauteils auf Lufteinschlüsse, Delaminationen, Fremdkörpereinschlüsse, Dickenschwankungen etc. ist erforderlichenfalls möglich.

Die **Fig. 4** zeigt einen detaillierten Lagenaufbau im Anschlussbereich des vorderen Holms 26 an die Außenhaut 33 innerhalb des Gesamtaufbaus 23 der Verstärkungsfaseranordnung. Beide Kerne 26,27 sind wiederum mit Eck-Vorformlingen 36,37 belegt. Auf den Eck-Vorformlingen 36,37 liegen die Haut-Vorformlinge 38,39 überlappend auf. Dann folgen zwei Holm-Vorformlinge 40,41, getrennt durch einen Zwischen-Vorformling 42. Zwischen den Kernen 26,27 verläuft zur Erzielung einer hinreichend ebenen Fläche noch ein (Verstärkungsfaser-)Zwickel 43 mit einer ungefähr dreieckförmigen Querschnittsgeometrie. Den oberen Abschluss der Gesamtanordnung 23 bilden wiederum zwei Lagen eines bahnförmigen Halbzeugs 44. Infolge der jeweils überlappenden Schichtung im Randbereich der Vorformlinge wird ein sehr inniger Verbund und hierdurch eine hohe Festigkeit des resultierenden Faserverbundbauteils erreicht.

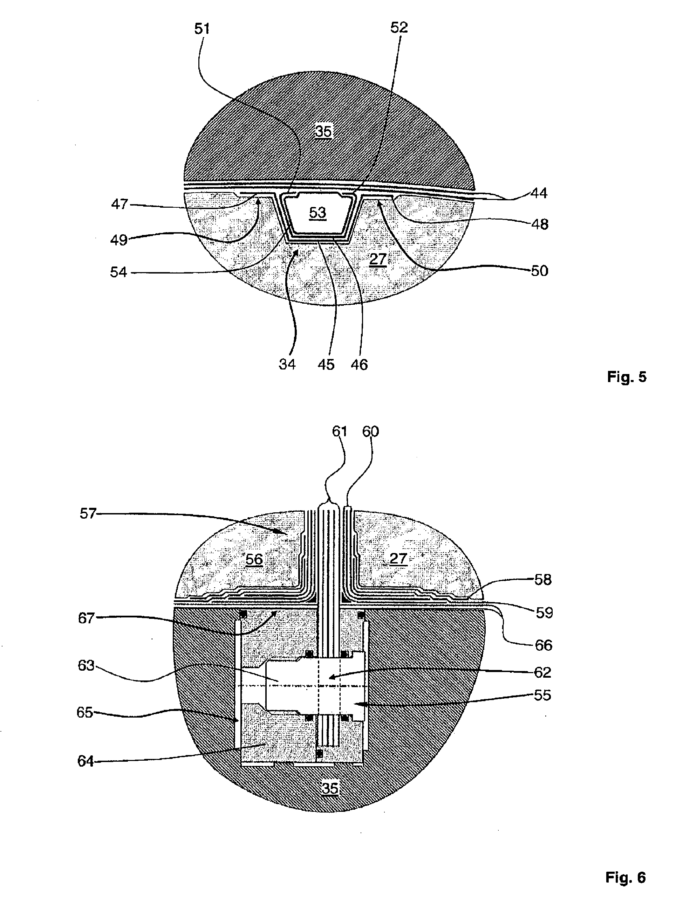

Die **Fig. 5** stellt einen weiteren Ausschnitt aus der Fig. 3 dar und veranschaulicht in einer Detailansicht die Anordnung von Stringer-Vorformlingen zur Ausbildung der Längsversteifung, insbesondere in der Form eines Ω-Stringers bzw. eines Hut-Stringers.

Der Hut-Stringer 34 ist im Ausführungsbeispiel der Fig. 5 mit zwei ineinander geschachtelt angeordneten Stringer-Vorformlingen 45,46 mit einer jeweils trapezförmigen Querschnittsgeometrie gebildet. Der äußere Stringer-Vorformling 45 verfügt über zwei beidseitig angeordnete Laschen 47,48, die in stufenförmigen Vertiefungen 49,50 auf dem Kern 27 aufliegen, um einen ebenen oberen Abschluss zu erzielen. Die Laschen 47,48 sind voneinander weg, nach außen gerichtet. Der innere Stringer-Vorformling 46 weist zwei aufeinander zu weisende Laschen 51,52 auf. Die beiden Stringer-Vorformlinge 45,46 sind in einer Längsvertiefung 53 des Kerns 27, die im gezeigten Ausführungsbeispiel als eine Nut mit einer trapezförmigen Querschnittsgeometrie ausgebildet ist, eingelegt. Zur Abstützung der Stringer-Vorformlinge 45,46 beim abschließenden Infiltrationsprozess dient ein hohler Stützkörper 54, der beispielsweise mit einem bedingt elastischen, aufblasbaren Folienschlauch gebildet sein kann und der nach dem Infiltrations- und Aushärtungsvorgang aus dem Längsversteifungsprofil 34 wieder herausgezogen wird. Der Aufbau wird nach oben durch zwei Lagen des bahnförmigen Halbzeugs 44 (Gewebe) abgeschlossen. Der Stützkörper kann alternativ mit demselben auflösbaren (schmelzbaren oder löslichen) Material wie die Kerne 11 bis 13 gebildet sein.

Die **Fig. 6** zeigt eine Schnittdarstellung entlang der Schnittlinie VI-VI in der Fig. 3, die die Integration eines Lasteinleitungspunktes in das spätere Verbundbauteil nach Maßgabe des Verfahrens illustriert.

Ein Lasteinleitungspunkt 55 ist im Bereich zwischen dem Kern 27 und einem benachbarten Kern 56, der in der Darstellung der Fig. 3 in Bezug auf die Zeichenebene hinter dem Kern 27 liegt, als ein integraler Bestandteil einer mit mindestens einem trockenen Vorformling gebildeten (Quer-)Rippe 57 ausgestaltet.

Der Kern 27 ist mit einem Eck-Vorformling 58, einem Haut-Vorformling 59 sowie drei Rippen-Vorformlingen 60 belegt. Die Anordnung der Vorformlinge auf dem zweiten Kern 56 ist spiegelsymmetrisch zur Anordnung der Vorformlinge auf dem Kern 27. Im Unterschied zum "normalen" Aufbau der Holme bzw. Rippen mit trockenen Vorformlingen, sind im Fall der Schaffung des Lasteinleitungspunktes 55 insgesamt fünf zusätzliche Lasteinleitungs-Vorformlinge 61 vorgesehen, die zwischen den Rippen-Vorformlingen 60 angeordnet sind und somit für eine optimale, großflächige Kraftüberleitung in die Gesamtstruktur des Faserverbundbauteils sorgen. An ihren unteren, nicht bezeichneten Enden, weisen die Lasteinleitungs-Vorformlinge 61 eine Ausnehmung 62 auf, die zur Durchführung eines zylindrischen Kerns 63 bzw. Bolzens zur Ausbildung eines Anbindungsauges im späteren Verbundbauteil dient. Alternativ können die unteren Enden der Lasteinleitung-Vorformlinge 61 auch einfach um den Kern 63 herum gelegt werden. Der Kern 63 kann mit denselben auflösbaren bzw. löslichen Kernmaterialien wie die übrigen Kerne 11 bis 13 gebildet sein. Der Kern 63 ist weiterhin in einer zweigeteilten Form 64 aufgenommen, die wiederum in einer korrespondierend hierzu ausgestalteten Kavität 65 im Formwerkzeug 35 eingelassen ist. Die Zweiteilung der Form 64 gewährleistet die Entformbarkeit. Zur Durchführung der Lasteinleitungs-Vorformlinge 61 durch die spätere Außenhaut ist eine Ausnehmung 67 bzw. Durchführung mit einer Randverstärkung, insbesondere ein Schlitz, in beide Lagen des bahnförmigen Halbzeugs 66 eingebracht. Alternativ kann das Auge auch durch nachträgliches Bohren der Lasteinleitungs-Vorformlinge 61 nach der erfolgten Infiltration und Aushärtung erfolgen. In diesem Fall sind der zylinderische Kern 63, die zweigeteilte Form 64 sowie die Kavität 65 im Formwerkzeug 35 entbehrlich.

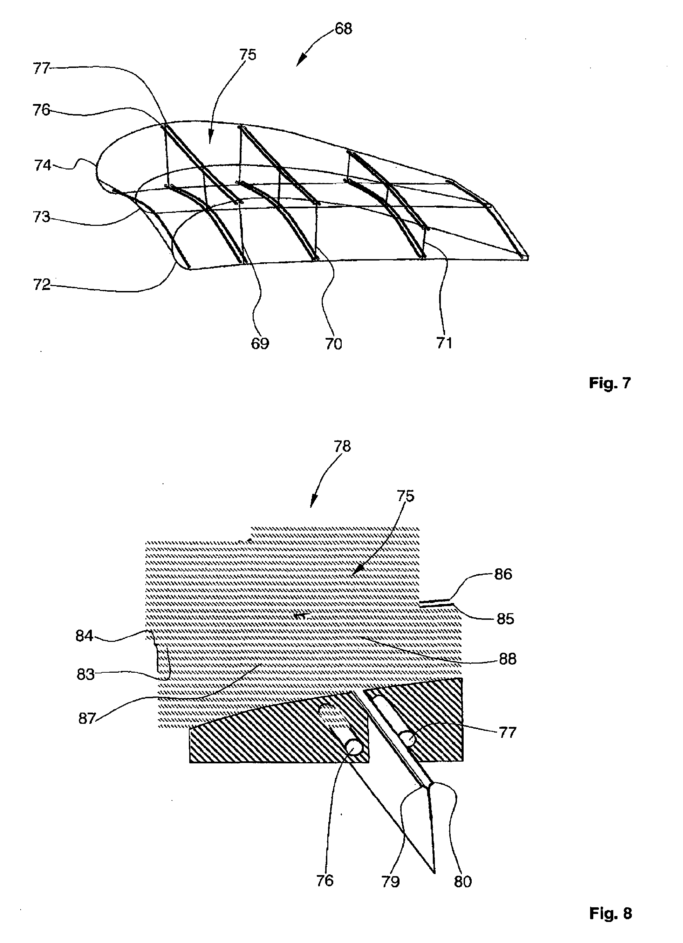

Die **Fig. 7** illustriert schematisch eine alternative Ausgestaltung der Kernform nach Fig. 1, um insbesondere eine präzise Ausrichtung der Kerne nach deren Herstellung zu erleichtern.

Eine Kernform 68 umfasst unter anderem drei Holmbleche 69 bis 71 sowie drei Rippenbleche 72 bis 74 als Platzhalter (Trennbleche) für die Rippen und die Holme im späteren Faserverbundbauteil. In den durch Holmbleche 69 bis 71 sowie die Rippenbleche 72 bis 74 jeweils eingegrenzten Zellen werden insgesamt acht Kerne, von denen ein Kern 75 mit einer Bezugsziffer versehen ist, durch das Einfüllen des aushärtbaren Kernmaterials, wie vorstehend beschrieben, hergestellt. Die weiteren Komponenten der Kernform 68 sind der besseren Übersicht halber nicht dargestellt (vgl. insb. Fig. 1).

Im Unterschied zu der Ausführungsform der Kernform 1 nach Maßgabe der Fig. 1 sind in der Kernform 68 eine Vielzahl von Positionier(hilfs-)mitteln, von denen zwei Positioniermittel stellvertretend für die übrigen mit den Bezugsziffern 76,77 versehen sind, vorgesehen. Die Positioniermittel 76,77 werden beim Gießvorgang der Kerne einfach mit eingegossen und werden nach Erhärten bzw. Abbinden der Kerne aus diesen herausgezogen. Die Positioniermittel 76,77 sind vorzugsweise mit teflonbeschichteten Drähten oder Röhrchen gebildet, um das Herausziehen aus den Kernen zu erleichtern.

Die Positioniermittel 76,77 werden durch nicht bezeichnete Bohrungen in den Rippenblechen 72,73 geführt und folgen unter Aufrechterhaltung eines kleinen Abstandes von wenigen Millimetern in etwa der jeweiligen oberen und unteren Kontur der Kanten der Holmbleche 69 bis 71. Aufgrund der Krümmung der Kanten der Holmbleche 69 bis 71 und des geradlinigen Verlaufs der Positioniermittel 76,77 kann dieser Abstand jedoch variieren. Die Positioniermittel 76,77 können durch nicht dargestellte Spannmittel mit einer mechanischen Vorspannung versehen werden, um einen definierten Verlauf zu erreichen.

Die Funktion der Positioniermittel 76,77 ist wie folgt: Nachdem die gegossenen Kerne im Verfahrensschritt a) ausgehärtet sind, werden die Positioniermittel 76,77 aus den Kernen herausgezogen. Anschließend werden sämtliche Kerne mit den Vorformlingen, wie im Rahmen der Beschreibung der Fig. 2 bis Fig. 6 erläutert, belegt (Verfahrensschritt b). Anschließend werden die Kerne nebeneinander zu einer Reihe angeordnet (zunächst jeweils parallel zu den Holm-Vorformlingen) und durch das Wiedereinfädeln der Positioniermittel präzise zueinander ausgerichtet und zusammen gehalten. Anschließend werden weitere Kerne in Rippenrichtung zu einer vollständigen Reihe gruppiert und weitere Reihen gebildet, bis der komplette Aufbau erreicht ist. Nachdem alle Reihen angeordnet und ausgerichtet sind, erfolgt im Verfahrensschritt c) das gleichmäßige Belegen aller Kerne mit dem bahnförmigen Halbzeug für die Außenhautverstärkung und damit die Schaffung des Gesamtaufbaus der zur Herstellung des integralen Faserverbundbauteils erforderlichen kompletten Verstärkungsfaseranordnung. Insbesondere die Materialstärke der Holm-Vorformlinge, der Rippen-Vorformlinge sowie eine Lagenanzahl des umgewickelten bahnförmigen Halbzeuges ist so zu bemessen, dass der Gesamtaufbau möglichst passgenau und verzugsfrei im Verfahrensschritt d) in das mindestens zweigeteilte Formwerkzeug für den RTM-Prozess einbringbar ist. Gegebenenfalls müssen optionale Lagen mit Verstärkungsfasern in den Gesamtaufbau zum Toleranzausgleich eingebracht werden. Durch die Positioniermittel wird zudem ein Verschieben der Kerne innerhalb des RTM-Werkzeugs verhindert und eine hohe und reproduzierbare Maßhaltigkeit des Faserverbundbauteils erzielt. Die letzten beiden Schritte e) und f) umfassen lediglich das Aushärten des Faserverbundbauteils nach dem RTM-Prozess sowie das anschließende Entfernen der Kerne aus dem hohlen Verbundbauteil.

In der **Fig. 8** ist ein Kreuzungsbereich 78 zwischen dem Kern 75 und weiteren drei angrenzenden, nicht bezeichneten Kernen dargestellt. Die räumliche Erstreckung der Kerne zwischen den Vorformlingen ist durch ein Punktraster veranschaulicht. Im Kreuzungsbereich 78 sind zwei durchgehende Holm-Vorformlinge 79,80 sowie vier Rippen-Vorformlinge 83 bis 86 angeordnet. Zwischen den durchlaufenden Holm-Vorformlingen 79,80 können gegebenenfalls senkrechte, ebene Lagen (s.g. "Blades") eingefügt sein, um die Materialstärke der Holme zu erhöhen. Von zentraler Bedeutung für die erreichbare Festigkeit des späteren integralen Faserverbundbauteils sind die sich über die Gesamtlänge des Bauteils erstreckenden, einstückigen Holm-Vorformlinge 79 und 80. Demgegenüber sind die Rippen-Vorformlinge 83 bis 86 unterteilt, das heißt sie erstrecken sich lediglich zwischen zwei benachbarten Holmen. Obere, nicht bezeichnete Laschen der Vorformlinge 79 bis 86 sind jeweils in Richtung von gleichfalls nicht bezeichneten Kanten der Kerne umgeklappt. Im Bereich des Kreuzungsbereiches 78 sind auf die Positioniermittel 76,77 viertelkreissegmentförmige Scheiben 87,88 aufgezogen, durch die im späteren Verbundbauteil die viertelkreissegmentförmigen Drainageöffnungen entstehen. Die Scheiben 87,88 sind bevorzugt mit demselben auflösbaren Material gefertigt wie die Kerne. Entsprechend zur Ausgestaltung der Fig. 8 werden an allen weiteren Kreuzungsbereichen derartige Scheiben zur Schaffung von Drainageöffnungen vorgesehen. Die vier Rippen-Vorformlinge 83 bis 86 weisen zu diesem Zweck Ausschnitte auf, deren Gestalt jeweils in etwa der geometrischen Gestalt der Scheiben 87,88 entspricht. Die Einbringung von Bohrungen in die Außenhaut des späteren Faserverbundbauteils zur Schaffung einer Entwässerungsmöglichkeit kann infolge der viertelkreissegmentförmigen Drainageöffnungen entfallen, was in statischer sowie aerodynamischer Hinsicht vorteilhaft ist und darüber hinaus die Fertigung vereinfacht. Innerhalb der Struktur befindliches Kondensationswasser kann jedoch nur entlang der Holme fließen, da keine Drainageöffnungen in den Holmen vorgesehen sind.

Als Alternative zu den in den Eckbereichen der Zellen angeordneten Scheiben 87,88 können auch die Rippenbleche 72 bis 74 (vgl. Fig. 7) mit entsprechend angeordneten, beispielsweise viertelkreissegmentförmigen Aussparungen bzw. Vertiefungen versehen werden, die während des Gießvorgangs der Kerne mit dem Kernmaterial volllaufen und im späteren Verbundbauteil ebenfalls entsprechende Drainageöffnungen bilden, um unter anderem den Abfluss von Kondensationswasser aus der Landeklappe entlang der (Längs-)Holme zu gewährleisten.

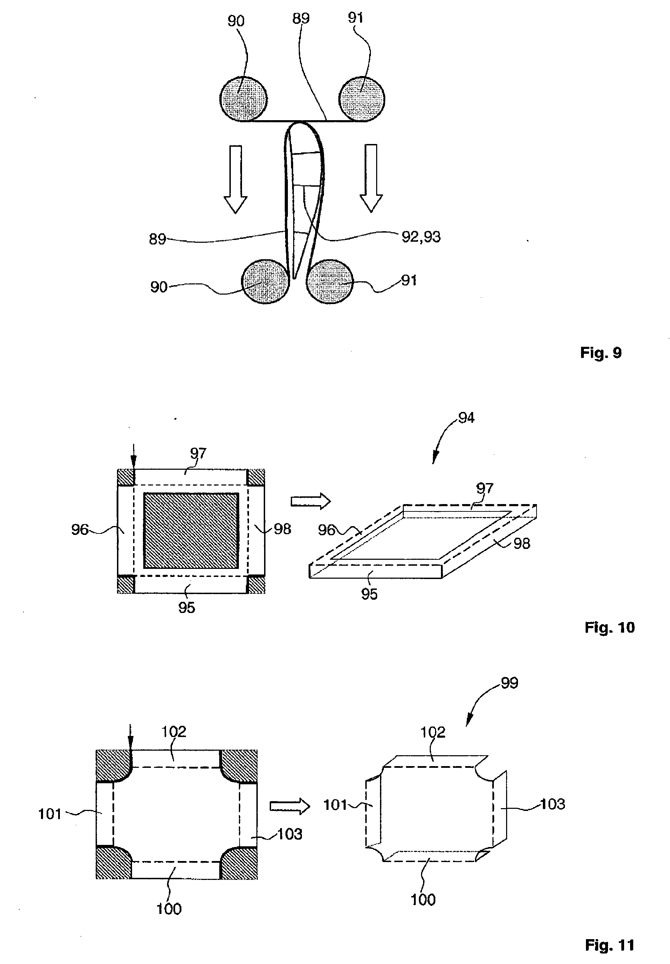

Die **Fig. 9** illustriert schematisch den Ablauf des Verfahrensschritts c), in dem das bahnförmige Halbzeug auf die positionierten und mit Vorformlingen versehenen Kerne aufgelegt wird.

Ein bahnförmiges Halbzeug 89, insbesondere ein drapierfähiges Kohlefasergewebe, ist auf zwei Spulen 90,91 der hierzu benutzten Vorrichtung bevorratet. Durch die Abwärtsbewegung der beiden Spulen 90,91 in Richtung der nach unten weisenden Pfeile wird das bahnförmige Halbzeug 89 gleichmäßig von den Spulen 90,91 abgezogen und auf einen vorbereiteten Aufbau 92 abgelegt und zugeschnitten. In vorteilhafter Weise wird jede Spule 90,91 während der Abwärtsbewegung an den vorbereiteten Aufbau 92 herangeführt und in vertikaler Richtung nachgeführt, um einen faltenfreien Legeprozess zu unterstützen.

Erforderlichenfalls kann der Vorgang mindestens einmal wiederholt werden, um eine höhere Materialstärke des bahnförmigen Halbzeugs 89 auf dem vorbereiteten Aufbau 92 und damit der späteren Außenhaut zu erhalten. Es können weitere, nicht dargestellte Andruckrollen vorgesehen sein, um das Halbzeug 89 fest und vor allem faltenfrei an den Aufbau 92 anzudrücken und gegebenenfalls zeitgleich in seiner erreichten Lage durch die Anwendung von Wärme und/oder dem Aufbringen eines Bindemittels zu sichern. Nach dem der Auftrag des bahnförmigen Halbzeugs 89 auf den Aufbau 92 beendet ist, verkörpert der Aufbau 92 nunmehr einen fertigen Gesamtaufbau 93 einer vollständigen Verstärkungsfaseranordnung für die Herstellung des Faserverbundbauteils.

Die **Fig. 10** und **11** illustrieren schematisch einen möglichen Aufbau von zwei vorgefertigten Vorformlingen zum Belegen der Kerne, das heißt letztendlich zur Schaffung der inneren Versteifungsstruktur. Beide Vorformlinge sind durch Zuschneiden und Falten aus einem ebenen Zuschnitt gebildet worden. Der verwendete Zuschnitt kann beispielsweise mit einem multiaxialen Fasergelege oder mit einem drapierfähigen Gewebe aus Kohlefasern gebildet sein. In den Fig. 10,11 stellen die gestrichelten Linien jeweils Faltlinien, die mit hoher Strichstärke eingezeichneten Linien symbolisieren jeweils Schnittlinien und die punktierten Linien stellen jeweils den ursprünglichen Umriss des Zuschnitts bzw. verdeckte Kanten in der isometrischen Ansicht dar. Ausgeschnittene Bereiche sind zur weiteren Verdeutlichung schraffiert.

Der linke Teil der **Fig. 10** zeigt ein schematisches Beispiel für einen Zuschnitt, der zur Herstellung des im rechten Teil abgebildeten Eck-Vorformlings 94 herangezogen wird. Die Eck-Vorformlinge 94 dienen zur Kantenverstärkung der Zellen innerhalb des Faserverbundbauteils sowie zur mechanischen Anbindung zwischen der Außenhaut und den Holm- bzw. den Rippen-Vorformlingen durch die Schaffung von Überlappungen. Der Eck-Vorformling 94 weist vier durch Einschneiden entlang der mit hoher Strichstärke gezeichneten Linie (quadratische Abschnitte vom Zuschnitt) und anschließendes Umklappen um etwa 90° gebildete Laschen 95 bis 98 auf, die in die umlaufenden, gestuften Vertiefungen an den Kanten der Kerne eingelegt werden (vgl. insb. Fig. 3).

Der linke Teil der **Fig. 11** zeigt einen beispielhaften Zuschnitt für einen Rippen-Vorformling 99, aus dem durch Zuschneiden entlang der mit hoher Strichstärke gezeichneten Linien (im Wesentlichen quadratische Eckabschnitte mit innenseitig gerundeten Ecken) sowie durch Umklappen der Laschen 100 bis 103 der Rippen-Vorformling 99 gestaltet wird, wie er zur Erzeugung der integralen Rippen im späteren Verbundbauteil notwendig ist. Die Umfangskontur ist in der schematischen Darstellung der Fig. 11 vereinfachend reckteckförmig dargestellt, folgt in der praktischen Ausführung jedoch der inneren Oberflächengeometrie der Außenhaut des Faserverbundbauteils.

Durch die Verwendung des Rippen-Vorformlings 99 nach Fig. 11 lassen sich jeweils in den Eckbereichen einer Rippe im Verbundbauteil ungefähr viertelkreissegmentförmige Drainageöffnungen generieren, die unter anderem zur Entwässerung des Verbundbauteils dienen. Diese heraus geschnittenen Eckbereiche des Rippen-Vorformlings 99 werden beim Gießprozess der Kerne durch die Scheiben mit der gleichen Geometrie freigehalten (vgl. insb. Fig. 7,8).

Die geometrische Gestalt eines Holm-Vorformlings (nicht in der Zeichnung dargestellt) entspricht- abgesehen von der fehlenden mittleren Ausnehmung und einer erheblich größeren Längenausdehnung (in horizontaler Richtung) - der Gestalt des Eck-Vorformlings 94 nach Maßgabe der Fig. 10.

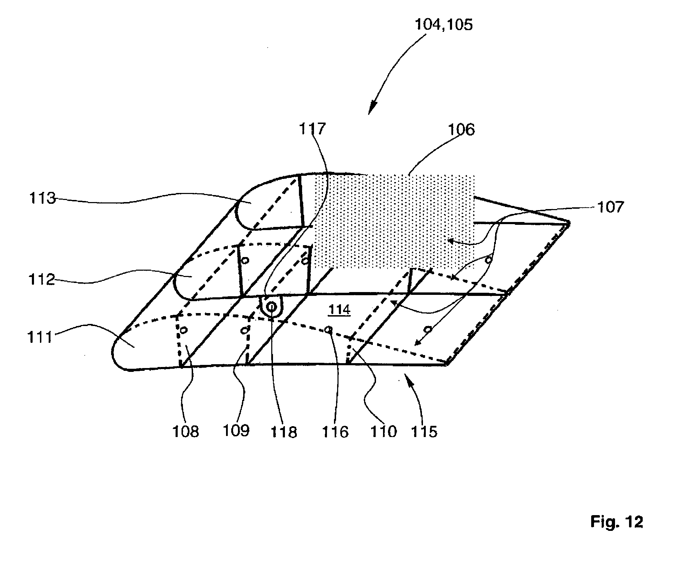

Die **Fig. 12** zeigt schließlich das fertiggestellte integrale Faserverbundbauteil mit einer Vielzahl von innenliegenden und hinterschnittenen Versteifungselementen in einer Ansicht von unten.

Ein nach Maßgabe des Verfahrens hergestelltes Faserverbundbauteil 104, bei dem es sich im gezeigten Ausführungsbeispiel um eine Landeklappe 105 handelt, weist eine Vielzahl von innenliegenden, hinterschnittenen sowie integral zu einer Außenhaut 106 ausgebildeten Versteifungselemente 107 auf. Die Versteifungselemente 107 sind exemplarisch als (Längs-)Holme 108 bis 110 sowie hierzu unter einem Winkel von etwa 90° verlaufende (Quer-)Rippen 111 bis 113 ausgeführt. Die sich in Kreuzungsbereichen "kreuzenden" Holme 108 bis 110 sowie Rippen 111 bis 113 bilden eine innere Versteifungsstruktur mit acht im Wesentlichen in sich geschlossenen Zellen, von denen eine Zelle repräsentativ für alle übrigen mit der Bezugsziffer 114 versehen ist. In die Außenhaut 106 sind im Bereich einer Unterseite 115, jeweils etwa mittig in Bezug zu den Zellen, Bohrungen eingebracht, von denen eine Bohrung mit der Bezugsziffer 116 versehen ist. Die Bohrungen dienen zur Entwässerung der Zellen sowie darüber hinaus als Inspektions- bzw. Wartungsöffnungen. Die Bohrungen sind im Fall der viertelkreissegmentförmigen Ausnehmungen in den (Quer)-Rippen zumindest im Hinblick auf die Drainage von eingedrungenem Wasser entbehrlich, gleichwohl für Inspektions- und Wartungsaufgaben von Vorteil. Weiterhin ist das Faserverbundbauteil 104 im Bereich der Unterseite 115 mit einem integral zur Rippe 112 gestalteten Lasteinleitungspunkt 117, exemplarisch in Form eines Auges 118 ausgestattet.

Eckbereiche der Rippen 111 bis 113 weisen jeweils eine Vielzahl von vierteilkreisförmigen Öffnungen auf, von denen eine Öffnung bzw. Ausnehmung repräsentativ für alle übrigen die Bezugsziffer 119 trägt. Die Öffnungen dienen zum heraus Spülen der Kerne nach dem Abschluss des RTM-Prozesses und im fertigen Faserverbundbauteil 104 als Drainageöffnungen zur Ableitung von innerhalb des Bauteils entstandenem Kondensationswaser. Abweichend von der viertelkreisförmigen Form können die Ausnehmungen 119 jede andere denkbare geometrische Formgebung aufweisen.

Vorzugsweise ist das Faserverbundbauteil 104 mit einem kohlefaserverstärkten Epoxidharz hergestellt. Bei integralen Faserverbundteilen, bei denen geringere Anforderungen an die strukturelle Festigkeit und/oder die Schlagfestigkeit (so genannte "Impact"-Festigkeit) gestellt werden, können alternativ auch andere Duroplaste, wie zum Beispiel Polyesterharze, Phenolharze etc., eingesetzt werden. Ausnahmsweise können auch thermoplastische Kunststoffe verwendet werden, wenn deren mechanische Eigenschaften im Vergleich zu den Duroplasten für den jeweiligen Anwendungsfall noch ausreichend erscheint.

Das mittels des Verfahrens hergestellte Faserverbundbauteil 104 bzw. die Landklappe 105 verfügt aufgrund der vollintegralen Bauweise über ausgezeichnete Festigkeitswerte und ein geringes Gewicht. Daneben lässt sich das Bauteil in einem weitgehend vollautomatisierten Prozess im industriellen Maßstab mit einer hohen Maßhaltigkeit und einer guten Wiederholbarkeit der geometrischen Abmessungen und einem erheblich reduzierten Montageaufwand produzieren.

Lediglich später hinzuzufügende Ausrüstungskomponenten, wie etwa Dichtungselemente, metallische Buchsen etc. müssen noch manuell eingebaut werden. Die bei Faserverbundbauteilen für einen ausreichenden Blitzschutz immer notwendigen Blitzschutzgewebe und/oder Blitzschutzleitungen werden schon vor dem Vollzug des RTM-Prozesses in die Außenhautlagen durch das Einbetten von Kupferdrahtgeweben, Kupferdrähten, metallisch leitfähige Lochrasterfolien oder dergleichen, geschaffen.

Handelt es sich bei dem herzustellenden Faserverbundbauteil beispielsweise um ein Seitenleitwerk, ein Höhenleitwerk oder eine komplette Tragfläche eines Flugzeugs, müssen zusätzlich noch die erforderlichen elektrischen, pneumatischen und hydraulischen Systeme eingebaut werden.

### Bezugszeichenliste

- 1: Kernform
- 2: unteres Formteil
- 3: oberes Formteil
- 4: Holmblech
- 5: Rippenblech
- 6: Schlitz (Rippenblech)
- 7: Schlitz (Holmblech)
- 8: Zelle (Gießform Kern)
- 9: Bohrung (Zuführung Kernmaterial bzw. Entlüftung)
- 9a: Entlüftungsbohrung
- 10: Steg
- 11: Kern
- 12: Kern
- 13: Kern
- 14: Eck-Vorformling
- 15: Haut-Vorformling
- 16: Holm-Vorformling (Rippen-Vorformling)
- 17: Holm-Vorformling (Rippen-Vorformling)
- 18: Seitenfläche (Kern)
- 19: Seitenfläche (Kern)
- 20: Zwischen-Vorformling
- 21: Kante
- 22: Kante
- 23: Gesamtaufbau (Verstärkungsfaseranordnung Verbundbauteil)
- 24: Zwickel
- 25: bahnförmiges Halbzeug (drapierfähiges Gewebe, Außenhaut)
- 26: Kern
- 27: Kern
- 28: Kern
- 29: Kern
- 30: Holm-Vorformling
- 31: Holm-Vorformling
- 32: Holm-Vorformling
- 33: bahnförmiges Halbzeug (Außenhaut)
- 34: Stringer-Vorformling (Längsversteifungsprofil)
- 35: Formwerkzeug
- 36: Eck-Vorformling
- 37: Eck-Vorformling
- 38: Haut-Vorformling
- 39: Haut-Vorformling
- 40: Holm-Vorformling
- 41: Holm-Vorformling
- 42: Zwischen-Vorformling
- 43: Zwickel
- 44: bahnförmiges Halbzeug (Außenhaut)
- 45: Stringer-Vorformling (äußerer)
- 46: Stringer-Vorformling (innerer)
- 47: Lasche
- 48: Lasche
- 49: Vertiefung (Kern)
- 50: Vertiefung (Kern)
- 51: Lasche
- 52: Lasche
- 53: Längsvertiefung (Kern)
- 54: Stützkörper
- 55: Lasteinleitungspunkt
- 56: Kern (auflösbar)
- 57: (Quer-) Rippe
- 58: Eck-Vorformling
- 59: Haut-Vorformling (Anbindung Eck-Vorformling ↔ Außenhaut)
- 60: Rippen-Vorformling
- 61: Lasteinleitungs-Vorformlinge
- 62: Ausnehmung (Lasteinleitungs-Vorformlinge)
- 63: zylindrischer Kern (Auge)
- 64: zweigeteilte Form
- 65: Kavität (Formwerkzeug)
- 66: bahnförmiges Halbzeug (Außenhaut)
- 67: Ausnehmung (bahnförmiges Halbzeug)
- 68: Kernform (Variante)
- 69: Holmblech
- 70: Holmblech
- 71: Holmblech
- 72: Rippenblech
- 73: Rippenblech
- 74: Rippenblech
- 75: Kern
- 76: Positioniermittel (teflonbeschichteter Draht)
- 77: Positioniermittel (teflonbeschichteter Draht)
- 78: Kreuzungsbereich
- 79: Holm-Vorformling
- 80: Holm-Vorformling
- 83: Rippen-Vorformling
- 84: Rippen-Vorformling
- 85: Rippen-Vorformling
- 86: Rippen-Vorformling
- 87: Scheibe
- 88: Scheibe
- 89: bahnförmiges Halbzeug (Außenhautlagen)
- 90: Spule
- 91: Spule
- 92: Aufbau (Kerne mit Vorformlingen)
- 93: Gesamtaufbau (Kerne mit Vorformlingen und Außenhautlagen)
- 94: Eck-Vorformling
- 95: Lasche
- 96: Lasche
- 97: Lasche
- 98: Lasche
- 99: Rippen-Vorformling
- 100: Lasche
- 101: Lasche
- 102: Lasche
- 103: Lasche
- 104: Faserverbundbauteil
- 105: Landeklappe
- 106: Außenhaut (Faserverbundbauteil)
- 107: Versteifungselemente
- 108: Holm
- 109: Holm
- 110: Holm
- 111: Rippe
- 112: Rippe
- 113: Rippe
- 114: Zelle
- 115: Unterseite (Faserverbundbauteil)
- 116: Bohrung (Entwässerung/Drainage)
- 117: Lasteinleitungspunkt
- 118: Auge
- 119: Ausnehmung (Drainage-Öffnung)

## Patentansprüche

1. Kernform (1,68), wobei die Kernform (1,68) eine Vielzahl von Zellen (8) aufweist, die zwischen einem oberen und einem unteren Formteil (2,3) zur Definition der inneren Oberflächengeometrie einer Außenhaut (106) eingeschlossen sind, wobei die Zellen (8) mit einer Vielzahl von jeweils zueinander beabstandet verlaufenden Trennblechen gebildet sind, die sich zumindest teilweise kreuzen und eine Vielzahl von Bohrungen zum Durchführen von Positioniermitteln aufweisen, und jede Zelle mindestens eine Bohrung (9) zur Zuführung des Kernmaterials aufweist.

2. Kernform (1,68) nach Patentanspruch 1, **dadurch gekennzeichnet, dass** die Positioniermittel (76,77) als anti-haftbeschichtete Drähte ausgebildet sind.

3. Kernform (1,68) nach Patentanspruch 1 oder 2, **dadurch gekennzeichnet, dass** die Trennbleche als Holmbleche (4,69-71) und Rippenbleche (5,72-74) ausgebildet sind.

4. Kernform (1,68) nach einem der Patentansprüche 1 bis 3, **dadurch gekennzeichnet, dass** die Formteile (2,3) und die Trennbleche mit einer leicht bearbeitbaren Metalllegierung, insbesondere einer Aluminiumlegierung, gebildet sind.

5. Kernform (1,68) nach einem der Patentansprüche 1 bis 4, **dadurch gekennzeichnet, dass** die Holmbleche (4,69-71) und die Rippenbleche (5,72-74) Schlitze (6,7) aufweisen, um das Aufeinanderstecken von Rippenblechen (5,72-74) und Holmblechen (4,69-71) zu ermöglichen.

## Claims

1. Core mould (1, 68), wherein the core mould (1, 68) comprises a plurality of cells (8) which are included between an upper and a lower mould part (2, 3) to define the internal surface geometry of an outer skin (106), the cells (8) being formed with a plurality of separating metal sheets, which extend with mutual spacing in each case, cross one another at least in part, and comprise a plurality of holes for passing positioning means through, and each cell comprising at least one hole (9) for passing the core material through.

2. Core mould (1, 68) according to claim 1, **characterised in that** the positioning means (76, 77) are in the form of anti-adhesive-coated wires.

3. Core mould (1, 68) according to either claim 1 or claim 2, **characterised in that** the separating metal sheets are in the form of spar metal sheets (4, 69-71) and rib metal sheets (5, 72-74).

4. Core mould (1, 68) according to any one of claims 1 to 3, **characterised in that** the mould parts (2, 3) and the separating sheets are formed using an easily workable metal alloy, in particular an aluminium alloy.

5. Core mould (1, 68) according to any one of claims 1 to 4, **characterised in that** the spar metal sheets (4, 69-71) and the rib metal sheets (5, 72-74) comprise slits (6, 7) so as to make it possible to place the rib metal sheets (5, 72-74) and the spar metal sheets (4, 69-71) on top of one another.

## Revendications

1. Moule à noyau (1, 68), la moule à noyau (1, 68) présentant une pluralité de cellules (8) qui sont enfermées entre une partie moulée supérieure et inférieure (2, 3) pour définir la géométrie de surface intérieure d'une enveloppe extérieure (106), les cellules (8) étant formées d'une pluralité de tôles de séparation s'étendant à distance les unes des autres qui se croisent au moins partiellement et présentent une pluralité d'alésages pour y introduire des moyens de positionnement, et chaque cellule présentant au moins un alésage (9) pour introduire le matériau de noyau.

2. Moule à noyau (1, 68) selon la revendication 1, **caractérisée par le fait que** les moyens de positionnement (76, 77) ont la forme de câbles couverts d'une couche anti-adhésive.

3. Moule à noyau (1, 68) selon la revendication 1 ou 2, **caractérisée par le fait que** les tôles de séparation ont la forme de tôles de longeron (4, 69 à 71) et de tôles nervurées (5, 72 à 74).

4. Moule à noyau (1, 68) selon l'une des revendications 1 à 3, **caractérisée par le fait que** les parties moulées (2, 3) et les tôles de séparation sont constituées d'un alliage de métal usinable, en particulier d'un alliage d'aluminium.

5. Moule à noyau (1, 68) selon l'une des revendications 1 à 4, **caractérisée par le fait que** les tôles de longeron (4, 69 à 71) et les tôles nervurées (5, 72 à 74) présentent des fentes (6, 7) pour permettre l'emboîtement de tôles nervurées (5, 72 à 74) avec des tôles de longeron (4, 69 à 71).
